# EUROPÄISCHE PATENTSCHRIFT

(11) **EP 2 781 335 B1**
(45) Veröffentlichungstag und Bekanntmachung des Hinweises auf die Patenterteilung: **07.10.2015**
(21) Anmeldenummer: 13198111.0
(22) Anmeldetag: 18.12.2013
(51) Int. Cl.: B29C 49/48, B29C 49/78

(54) **Vorrichtung zum Steuern eines Temperiergeräts einer Blasform-Maschine und Verfahren zum Steuern eines Temperiergeräts einer Blasform-Maschine**
Device for controlling a tempering device of a blow moulding machine and method for controlling a tempering device of a blow moulding machine
Dispositif de commande d'un appareil de régulation de température d'une machine de formage par soufflage et procédé de commande d'un appareil de régulation de température d'une machine de formage par soufflage

(30) Priorität: 18.03.2013 DE 102013204680
(43) Veröffentlichungstag der Anmeldung: 24.09.2014
(73) Patentinhaber: Krones AG, 93073 Neutraubling (DE)
(72) Erfinder: Höllriegl, Thomas, 93073 Neutraubling (DE); Brunner, Andreas, 93073 Neutraubling (DE); Finger, Dieter, 93073 Neutraubling (DE); Effenberger, Harald, 93073 Neutraubling (DE); Eichenseher, Andreas, 93073 Neutraubling (DE); Vogler, Daniel, 93073 Neutraubling (DE)
(74) Vertreter: Grünecker Patent- und Rechtsanwälte PartG mbB

(56) Entgegenhaltungen:
- EP-A1- 1 717 004
- EP-A2- 2 208 606
- EP-A2- 2 511 245
- DE-A1- 3 832 284
- US-A1- 2004 115 294

## Beschreibung

Die Erfindung betrifft eine Vorrichtung zum Steuern eines Temperiergeräts einer Blasformmaschine und ein Verfahren zum Steuern eines Temperiergeräts einer Blasformmaschine.

### Stand der Technik

Bei der Herstellung von Hohlkörpern, z.B. PET-Flaschen, mittels einer Blasformmaschine werden Preforms (Vorformlinge) in einem ersten Schritt auf eine Verarbeitungstemperatur aufgeheizt. In einem zweiten Schritt werden die aufgeheizten Preforms in einer Blasformmaschine zu der gewünschten Flaschenform ausgeformt. Dazu werden die aufgeheizten Preforms an die Blasformen übergeben, wobei die Blasformen vorzugsweise aus Aluminium oder Stahl bestehen und als Negativform der gewünschten Flaschenform ausgebildet sind. Verschiedene Teile der Blasform werden mittels eines durch Kanäle in der Blasform fließenden Temperiermediums auf unterschiedliche Temperaturen aufgeheizt. Durch Ausbildung eines Drucks in der Preform wird das PET-Material an die Wände der Blasform gepresst und erhält so die endgültige Flaschenkontur. Eine Kühlung zumindest eines Teils der Blasform mittels Wasser und/oder Öl sorgt für eine Abkühlung der fertigen PET-Flaschen.

Aus der DE 10 2010 028 253 A1 ist eine Blasmaschine bekannt, die ein mit Flüssigkeit betriebenes Primärfunktions-Temperiersystem zum Temperieren der Blasformen und ein Flüssigkeits-Temperiersystem zum Temperieren von funktionellen Ausstattungskomponenten umfasst. Die Formschalen der geteilten Blasformen werden im Allgemeinen auf ein anderes Temperaturniveau temperiert als eine Bodenform.

Aus der DE 10 2009 005 142 A1 ist eine Streckblasmaschine mit einem ersten Fluidkreislauf zum Temperieren einer Seitenwand und wenigstens einem weiteren Fluidkreislauf zum Temperieren des Bodens bekannt. Steuerbare Ventile sind vorgesehen, um den Durchfluss des in dem ersten Fluidkreislauf durch einen Wärmetauscher strömenden Fluids zu steuern. Zudem kann der Wärmestrom durch den Wärmetauscher so gesteuert werden, dass das zu erwärmende Fluid eine bestimmte Temperatur nicht überschreitet. Beim Aufheizen des Formträgers, der Seitenwände und des Bodens wird mittels regelbarer Ventile im ersten bzw. zweiten Fluidkreislauf eine gewünschte Vorlauftemperatur des Fluids mithilfe von Temperaturmesseinrichtungen im ersten bzw. zweiten Fluidkreislauf eingestellt. Der Sollwert der Vorlauftemperatur wird aus der gewünschten Temperatur in der entsprechenden Maschinenkomponente und einem additiven Korrekturwert vorgegeben.

Aus der EP 1 775 097 A1 ist ein Gerät zur Temperierung von Formwerkzeugen mit mindestens zwei Temperierkreisen bekannt. Die Temperatur des Mediums kann in einer Aufheizvorrichtung mit einem dort angeordneten Temperatursensor ermittelt werden; zudem sind in den Rücklaufleitungen jeweils ein Temperatursensor und eine Durchflussmessturbine vorgesehen.

Aus der DE 10 2005 019 890 B3 ist eine Vorrichtung zur Temperierung von Formwerkzeugen bekannt, durch welche die Temperaturen in verschiedenen Zonen eines Formwerkzeugs unabhängig voneinander geregelt werden können. Jeder Zone des Formwerkzeugs ist ein Temperaturfühler zur Bestimmung der Ist-Temperatur der Zone zugeordnet, wobei die Temperiermedien-Temperatur auch im Formwerkzeug selbst bestimmt werden kann. Ein Temperaturfühler ist zudem vorgesehen, um die Vorlauftemperatur des Temperiermediums vor dem Eintritt in das Formwerkzeug zu bestimmen.

Aus der EP 2 511 245 A2 offenbart ein Steuerungssystem und -verfahren mit einer geschlossenen Schleife zur Gussformtemperaturkontrolle in einer IS (idividual section) Maschine. Die Temperatur der Innenseite der Gussformhälften wird gemessen und mit einem gewünschten Temperatursollwert verglichen. Die Gussformhälften erhitzen sich aufgrund des heißen Glases während jedes Zyklus zum Formen eines Blasrohlings, und die aufgenommene Wärme wird durch Einbringen von Kühlluft in Durchlässe in den Gussformhälften reduziert. Ein Regelkreis erstellt hierzu aus dem gemessenen Temperaturwert und dem gewünschten Temperatursollwert einen Ausgabewert zur Steuerung eines Reglers. Der Regler liefert eine Kühldauer, während der die Gussformhälften mit Kühlluft gekühlt werden, um den gewünschten Temperatursollwert zu erreichen.

Wird der Steuerung des Temperiergeräts von der Blasformmaschinensteuerung nur ein analoger Sollwert vorgegeben, so kann die Steuerung des Temperiergeräts nur die Temperatur des Temperiermediums regeln, wobei aber für den Blasprozess die Blasformtemperatur relevant ist. Aufgrund des Wegs, den das Temperiermedium von der Heizstrecke bis zur Blasform zurückzulegen hat und aufgrund des Wärmeübergangs zwischen Blasform und Temperiermedium, ist im Allgemeinen die Temperatur des Temperiermediums, das die Heizstrecke verlässt höher als die Temperatur der Blasform, die mittels des Temperiermediums aufgeheizt wird. Um dieser Temperaturdifferenz Rechnung zu tragen, wird bisher manuell ein Kompensationswert eingegeben, so dass das Temperiergerät die Temperatur des Temperiermediums entsprechend auf einen höheren Wert regelt, um die vorgegebene Solltemperatur der Blasform zu erreichen.

Die Temperaturdifferenz ist zudem von der Höhe der Solltemperatur wie auch von dem Blasprozess (Preformtemperatur, Blasradgeschwindigkeit, Blasformengröße) abhängig. Ist die Wärmeabgabe zu hoch, kann dies erst anhand eines Abfalls der Temperatur des Temperiermediums und nicht schon anhand eines Abfalls der Temperatur der Blasform festgestellt werden. Somit kann das Temperiergerät nur langsam auf Veränderungen reagieren und die Regelung der Temperatur des Temperiermediums an die geänderten Bedingungen anpassen.

### Aufgabe der Erfindung

Der Erfindung liegt die Aufgabe zugrunde, die Steuerung eines Temperiergeräts einer Blasformmaschine dahingehend zu verbessern, dass die Regelung der Mediumstemperatur nicht nur auf die vorgegebene Solltemperatur des Mediums ausgerichtet ist.

Somit sind beispielsweise keine Kompensationswerte für den Einbezug der Temperaturdifferenz zwischen Blasform und Temperiermedium erforderlich, und somit kann das Temperiergerät schneller auf Temperatureinflüsse, die z.B. durch den Blasprozess oder verschiedene Blasformgrößen bedingt sind, reagieren.

### Lösung

Die Aufgabe wird erfindungsgemäß durch die Vorrichtung zum Steuern eines Temperiergeräts einer Blasformmaschine nach Anspruch 1 und das Verfahren nach Anspruch 10 gelöst. Bevorzugte Ausführungsformen sind in den Unteransprüchen offenbart.

Die Vorrichtung zum Steuern eines Temperiergeräts einer Blasformmaschine zum Temperieren mindestens eines Blasformteils einer Blasform, die aus mindestens zwei Blasformteilen besteht, oder einer Blasform-Aufnahme auf eine Solltemperatur, umfasst: Mittel zum Empfangen eines Temperatur-Istwerts des Blasformteils oder der Blasform-Aufnahme, wobei der Temperatur-Istwert mittels eines Temperaturmessers in dem Blasformteil oder dessen Aufnahme (Mutterform bzw. Formträgerschale) oder in Zuleitungen für Temperiermedium zu bzw. Ableitungen für das Temperiermedium von dem Blasteil oder dessen Aufnahme gemessen wird; Mittel zum Empfangen eines Temperatur-Sollwerts des Blasformteils, wobei das Blasformteil oder dessen Aufnahme von dem Temperiermedium eines Temperierkreislaufs durchflossen wird; Mittel zum Analysieren des empfangenen Temperatur-Istwerts und des empfangenen Temperatur-Sollwerts; Mittel zum Berechnen eines Stellwerts für das Temperiergerät aus dem empfangenen Temperatur-Istwert und dem empfangenen Temperatur-Sollwert und Mittel zum Weiterleiten des Stellwerts an das Temperiergerät.

Die Blasformmaschine kann hierbei einen stehenden und einen drehenden Teil mit Blasformen umfassen, wobei das Temperiergerät innerhalb der Blasformmaschine angeordnet ist. Dadurch wird zum Einen eine erhebliche Platzersparnis erreicht, da beispielsweise keine Leitungen außerhalb der Blasformmaschine zum Transport des Temperiermediums vom Temperiergerät zu den einzelnen Blasformen nötig sind. Zum Anderen kann durch die Anordnung des Temperiergeräts innerhalb der Blasformmaschine eine Veränderung der Temperatur des Temperiermediums während des Transports zur Blasform effektiv reduziert oder sogar vermieden werden. Somit werden aufwendige Isolierungen der entsprechenden Leitungen zum Teil oder vollständig unnötig.

Durch die Anordnung sämtlicher für die Temperierung und die Steuerung der Temperierung notwendigen Komponenten innerhalb der Blasformmaschine kann die Temperierung nicht nur ökonomischer und platzsparender erfolgen, sondern insbesondere durch das Anordnen der Vorrichtung zum Steuern innerhalb der Blasformmaschine brauchen entsprechende Verbindungen (beispielsweise Kabel und Rohre bzw. Schlauchleitungen) nicht mehr durch die Produktionshalle, in der die Blasformmaschine angeordnet ist, verlegt werden und somit können Risiken, wie beispielsweise Beschädigungen, der entsprechenden Verbindungen vermieden werden.

Das Temperiermedium kann Wasser oder Öl sein. Bis zu einer Solltemperatur von etwa 95°C wird Wasser verwendet, für höhere Temperaturen wird meist Öl als Temperiermedium verwendet. Für die Temperierung der verschiedenen Blasformteile oder der Aufnahmen der Blasformen, auch Formträgerschalen oder Mutterformen genannt, werden im Allgemeinen unterschiedliche Temperaturen verwendet. Für die Formträgerschalen oder Mutterformen liegen typische Temperaturen zwischen 50°C und 60°C, für das Bodenteil zwischen 60°C und 90°C und die Seitenteile werden typischerweise bis zu 160°C temperiert. Die Formträgerschalen oder Mutterformenwerden zu nicht so hohen Temperaturen temperiert, damit der Temperaturunterschied zwischen der heißen Form (160°C) und der Umgebung (25°C) geringer ist, somit sind die Energieverluste geringer sind. Der Formträger wird dadurch vor thermischen Spannungen geschützt.

Durch Verwendung des Temperatur-Istwerts des Blasformteils, des Temperatur-Sollwerts des Blasformteils und von Betriebsparametern der Blasformmaschine ist die Vorrichtung zum Steuern des Temperiergeräts in der Lage, schnell auf Veränderungen zu reagieren, die relevant für die Herstellung der Flaschen sind. Unter relevanten Veränderungen sind hierbei Veränderungen zu verstehen, die, wenn sie nicht berücksichtigt und gegebenenfalls korrigiert würden, dazu führen, dass unter diesen Bedingungen hergestellte Flaschen außerhalb der Behälterspezifikationen liegen und nicht weiterverwendet werden können.

Eine Veränderung der Ist-Temperatur des Blasformteils kann direkt anhand des Temperatur-Istwerts, der von dem Temperaturmesser in dem Blasformteil gemessen wird, abgelesen werden, der die Veränderungen widerspiegelt. Im Gegensatz zum Stand der Technik muss also nicht darauf gewartet werden, bis eine Temperaturänderung des Temperiermediums festgestellt wird und aus dieser Temperaturänderung dann auf eine Änderung des Temperatur-Istwerts des Blasformteils rückgeschlossen wird.

Die Vorrichtung kann weiter Mittel umfassen zum Empfangen von Betriebsparametern der Blasformmaschine. Die Betriebsparameter, wie z.B. die Signale "Produktionsstart" oder "Produktionsende", können aus der Maschinensteuerung der Blasformmaschine stammen.

Weiter kann vorgesehen sein, dass die Mittel zum Analysieren zudem die empfangenen Betriebsparameter analysieren und dass die Mittel zum Berechnen des Stellwerts für das Temperiergerät zudem die empfangenen Betriebsparameter für das Berechnen des Stellwerts verwenden und dass die Mittel zum Weiterleiten diesen Stellwert an das Temperiergerät weiterleiten.

Wird beispielsweise ein Betriebsparameter der Blasformmaschine verändert, so kann dies schon bei Vornahme der Änderung durch die Vorrichtung zum Steuern des Temperiergeräts berücksichtigt werden und der Stellwert für das Temperiergerät entsprechend aktualisiert werden, so dass das Blasformteil entsprechend temperiert werden kann. Im Gegensatz zum Stand der Technik muss also nicht darauf gewartet werden, bis eine Temperaturänderung des Temperiermediums, die durch die veränderten Betriebsparameter bedingt ist, festgestellt wird.

Die Vorrichtung kann weiter Mittel zum Empfangen eines Vorlauftemperaturwerts des Temperiermediums bevor es durch das Blasformteil oder die Blasformteil-Aufnahme fließt, umfassen, wobei der Vorlauftemperaturwert mittels eines Vorlauf-Temperaturmessers in dem Temperiermedium gemessen wird. Anhand des Vorlauftemperaturwerts ist beispielsweise ersichtlich, ob das Temperiermedium auf dem Weg von der Heizstrecke zu der Blasform einen Wärmeverlust erleidet oder ob das Temperiermedium seine Temperatur halten kann, also kein Wärmeverlust auftritt.

Zudem kann die Vorrichtung Mittel zum Empfangen eines Durchflusswerts des Temperiermediums umfassen, nachdem es durch das Blasformteil oder die Blasformteil-Aufnahme geflossen ist, wobei der Durchflusswert mittels eines Durchflussmessers in dem Temperiermedium gemessen wird. Der gemessene Durchflusswert kann herangezogen werden, um zu entscheiden, ob die Pumpenleistung (Frequenzregelung) angepasst werden muss. Auch eine größere Leckage kann dadurch festgestellt werden.

Die Vorrichtung kann Mittel zum Empfang der Vorlauftemperatur des Temperaturmediums und der Rücklauftemperatur des Temperaturmediums bevor und nach dem es durch das Blasformteil oder die Blasformteil-Aufnahme fließt umfassen. Die gemessenen Daten können zur optimalen Anpassung des Volumenstroms, d.h. der Pumpenleistung, herangezogen werden.

Es kann auch vorgesehen sein, dass die Mittel zum Empfangen des Temperatur-Istwerts zu vorgegebenen Zeiten oder in bestimmten Abständen oder periodisch eine Anfrage an den Temperaturmesser in dem Blasformteil oder der Blasformteil-Aufnahme übermitteln und in Antwort auf die Anfrage den Temperatur-Istwert übermittelt bekommen und dann empfangen.

Es kann auch vorgesehen sein, dass die Mittel zum Empfangen des Vorlauftemperaturwerts zu vorgegebenen Zeiten oder in bestimmten Abständen oder periodisch eine Anfrage an den Vorlauf-Temperaturmesser in dem Temperiermedium übermitteln und in Antwort auf die Anfrage den Vorlauftemperaturwert übermittelt bekommen und dann empfangen.

Weiterhin kann vorgesehen sein, dass die Mittel zum Empfangen des Durchflusswerts zu vorgegebenen Zeiten oder in bestimmten Abständen oder periodisch eine Anfrage an den Durchflussmesser in dem Temperiermedium übermitteln und in Antwort auf die Anfrage den Durchflusswert übermittelt bekommen und dann empfangen.

Weiterhin kann die Vorrichtung eine Anzeigevorrichtung, vorzugsweise einen Berührungsbildschirm, umfassen. Die Anzeigevorrichtung dient beispielsweise dazu, einem Benutzer der Blasformmaschine eine tabellarische Übersicht der Istwerte der Temperatur und der Sollwerte der Temperatur für die Seitenteile, den Formträger und das Bodenteil einer Blasform anzuzeigen. Zudem können tolerierbare maximale Abweichungen von der Solltemperatur angezeigt werden, die auftreten können, ohne dass die unter solchen Bedingungen hergestellten Flaschen aussortiert werden müssen.

Eine Navigation und/oder eine Auswahl innerhalb einer Anzeige der Anzeigevorrichtung kann mittels einer Maus, eines Joysticks oder Ähnlichem erfolgen. Bei einem Berührungsbildschirm kann die Navigation und/oder Auswahl durch Berühren der Oberfläche des Berührungsbildschirms erfolgen.

Ein Verfahren zum Steuern eines Temperiergeräts einer Blasformmaschine zum Temperieren mindestens eines Blasformteils einer Blasform, die aus mindestens zwei Blasformteilen besteht, oder einer Blasformteil-Aufnahme auf eine Solltemperatur umfasst die folgenden Schritte: Empfangen eines Temperatur-Istwerts des Blasformteils oder der Blasformteil-Aufnahme durch eine erfindungsgemäße Vorrichtung zum Steuern des Temperiergeräts, wobei der Temperatur-Istwert mittels eines Temperaturmessers in dem Blasformteil oder der Blasformteil-Aufnahme gemessen wird; Empfangen eines Temperatur-Sollwerts des Blasformteils oder der Blasformteil-Aufnahme durch die Vorrichtung, wobei das Blasformteil oder die Blasformteil-Aufnahme von Temperiermedium eines Temperierkreislaufs durchflossen wird; Analysieren des empfangenen Temperatur-Istwerts und des empfangenen Temperatur-Sollwerts; Berechnen eines Stellwerts für das Temperiergerät aus dem empfangenen Temperatur-Istwert und dem empfangenen Temperatur-Sollwert durch die Vorrichtung und Weiterleiten des Stellwerts an das Temperiergerät durch die Vorrichtung.

Zudem kann das Verfahren den Schritt von Empfangen von Betriebsparametern der Blasformmaschine durch die Vorrichtung umfassen.

Vorzugsweise ist vorgesehen, dass das Verfahren weiter die Schritte von Analysieren der empfangenen Betriebsparameter durch die Vorrichtung, Berechnen des Stellwerts für das Temperiergerät aus dem empfangenen Temperatur-Istwert, dem empfangenen Temperatur-Sollwert und den empfangenen Betriebsparameter durch die Vorrichtung und Weiterleiten dieses Stellwerts an das Temperiergerät durch die Vorrichtung umfasst.

Das Verfahren kann weiter den Schritt von Empfangen, durch die Vorrichtung, eines Vorlauftemperaturwerts des Temperiermediums bevor es durch das Blasformteil oder die Blasformteil-Aufnahme fließt, umfassen, wobei der Vorlauftemperaturwert mittels eines Vorlauf-Temperaturmessers in dem Temperiermedium gemessen wird.

Weiterhin kann das Verfahren den Schritt von Empfangen, durch die Vorrichtung, eines Durchflusswerts des Temperiermediums umfassen, nachdem es durch das Blasformteil oder die Blasformteil-Aufnahme geflossen ist, wobei der Durchflusswert mittels eines Durchflussmessers in dem Temperiermedium gemessen wird.

Es kann vorgesehen sein, dass dem Empfangen des Temperatur-Istwerts ein Übermitteln einer Anfrage an den Temperaturmesser in dem Blasformteil oder der Blasformteil-Aufnahme zu vorgegebenen Zeiten oder in bestimmten Abständen oder periodisch durch die Vorrichtung zeitlich vorangeht und in Antwort auf die Anfrage ein Übermitteln des Temperatur-Istwerts erfolgt.

Weiter kann vorgesehen sein, dass dem Empfangen des Vorlauftemperaturwerts ein Übermitteln einer Anfrage an den Vorlauf-Temperaturmesser in dem Temperiermedium zu vorgegebenen Zeiten oder in bestimmten Abständen oder periodisch durch die Vorrichtung zeitlich vorangeht und in Antwort auf die Anfrage ein Übermitteln des Vorlauftemperaturwerts erfolgt.

Zudem kann vorgesehen sein, dass dem Empfangen des Durchflusswerts ein Übermitteln einer Anfrage an den Durchflussmesser in dem Temperiermedium zu vorgegebenen Zeiten oder in bestimmten Abständen oder periodisch durch die Vorrichtung zeitlich vorangeht und in Antwort auf die Anfrage ein Übermitteln des Durchflusswerts erfolgt.

Das Verfahren umfasst zudem den Schritt eines Anzeigens einer Anzeige auf einer Anzeigevorrichtung, wie vorzugsweise einem Berührungsbildschirm.

### Kurze Figurenbeschreibung

Weitere Vorteile und Ausführungsformen ergeben sich aus den beigefügten Zeichnungen. Darin zeigt:
- Figur 1: eine schematische Darstellung mit einer Vorrichtung zum Steuern eines Temperiergeräts einer Blasformmaschine zum Temperieren des Bodenteils einer Blasform;
- Figur 2: eine schematische Darstellung mit einer Vorrichtung zum Steuern eines Temperiergeräts einer Blasformmaschine zum Temperieren der Seitenteile einer Blasform;
- Figur 3: eine Anzeige der Anzeigevorrichtung für die Blasformtemperatur;
- Figur 4: eine Anzeige der Anzeigevorrichtung für eine interne Temperierung.

### Ausführliche Figurenbeschreibung

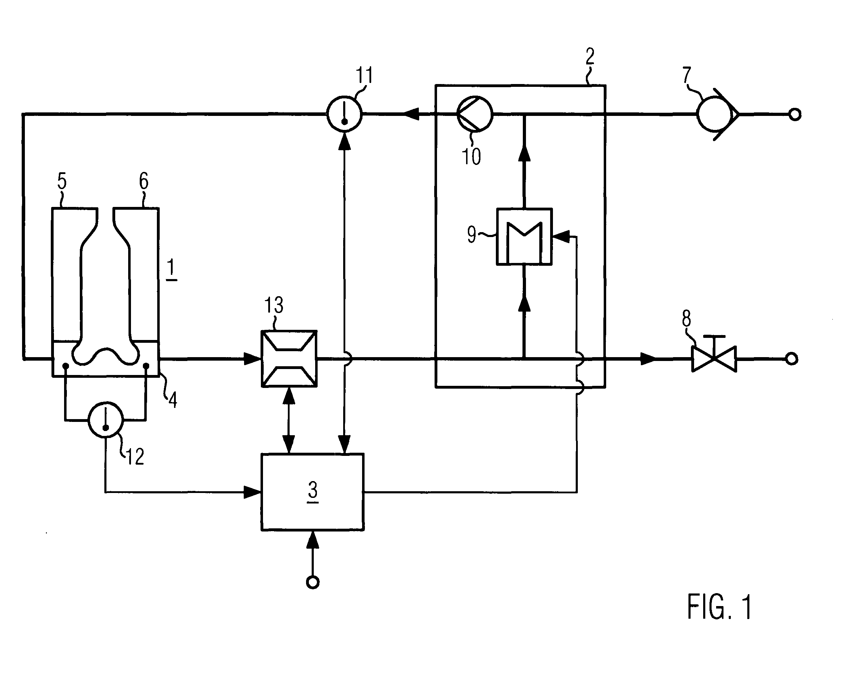

Figur 1 zeigt eine beispielhafte Anordnung einer Blasform 1 und eines Temperiergeräts 2, in der eine erfindungsgemäße Vorrichtung 3 zum Steuern des Temperiergeräts 2 einer Blasformmaschine zum Temperieren des Bodenteils 4 der Blasform 1 auf eine Solltemperatur vorgesehen ist.

Die dargestellte Blasform 1 besteht aus drei Blasformteilen: einem Bodenteil 4 und zwei Seitenteilen 5, 6. Eine Blasform 1 kann auch aus zwei oder mehr als drei Blasformteilen bestehen; die Blasformteile lassen sich im Allgemeinen so miteinander verbinden und voneinander lösen, dass ein Einbringen einer Preform (Vorformling) und ein Entfernen der ausgeformten Flasche problemlos möglich ist.

Das Temperiermedium wird mittels eines Leitungssystems transportiert. Über ein Rückschlagventil 7 kann dem Temperierkreislauf Temperiermedium einer ersten Temperatur zugeführt werden, wobei diese erste Temperatur Werte aufweist, die kleiner sind als die Temperatur des erhitzten Temperaturmediums oder als ein vorgegebener Temperaturwert. Das Regelventil 8 kann geöffnet werden, um Temperiermedium aus dem Regelkreis abzulassen und im Gegenzug über das Rückschlagventil Medium mit der ersten Temperatur in den Kreislauf aufzunehmen. Dies führt zu einer Absenkung der Temperiermediumstemperatur, beispielsweise um 5°C, 10°C oder 15°C, zu führen, zu einer größeren Absenkung der Temperatur von beispielsweise mehr als 25°C zu führen oder um das im Leitungssystem bereits vorhandene Temperiermedium komplett durch Temperiermedium mit der ersten Temperatur zu ersetzten. Durch das komplette Ersetzen mit Temperiermedium mit der ersten Temperatur kann eine Abkühlung des Blasformteils und somit auch der ausgeformten Flasche in der Blasform 1 erreicht werden. Der Temperierkreislauf umfasst weiter ein Regelventil 8, durch das Temperiermedium kontrolliert aus dem Temperierkreislauf abgelassen werden kann, um beispielsweise zu vermeiden, dass der Druck in dem Leitungssystem zu hoch wird oder die Temperatur zu weit ansteigt und möglicherweise zu Schäden führt. Das Temperiergerät 2 umfasst eine Heizstrecke 9, die dafür vorgesehen ist, Temperiermedium, das die Heizstrecke 9 durchfließt zu erhitzen und eine Pumpe 10, die dafür vorgesehen ist, das Temperiermedium in dem Leitungssystem umzuwälzen.

Eine sogenannte Vorlauftemperatur des Temperiermediums kann vor dem Durchfließen des Bodenteils 4 mittels eines Vorlauf-Temperaturmessers 11 in der Leitung gemessen werden. Der Vorlauftemperaturwert des Temperiermediums wird an die Vorrichtung 3 zum Steuern des Temperiergeräts 2 übermittelt. Die Übermittlung kann zu vorgegebenen Zeiten oder in bestimmten Abständen oder periodisch erfolgen. Auch kann vorgesehen sein, dass der Vorlauftemperaturwert des Temperiermediums von der Vorrichtung 3 zum Steuern zu vorgegebenen Zeiten oder in bestimmten Abständen oder periodisch abgefragt wird.

Das Temperiermedium wird durch Kanäle durch den Bodenteil 4 der Blasform 1 geleitet, so dass es durch einen Wärmeübergang zwischen dem Temperiermedium und dem Bodenteil 4 zu einer Erwärmung des Bodenteils 4 kommt, wenn die Temperatur des Temperiermediums höher als die Temperatur des Bodenteils 4 ist bzw. zu einer Abkühlung des Bodenteils 4 kommt, wenn die Temperatur des Temperiermediums kleiner als die Temperatur des Bodenteils 4 ist.

Der Temperatur-Istwert des Bodenteils 4 wird durch einen Temperaturmesser 12 in dem Bodenteil gemessen; der Temperatur-Istwert stellt den aktuellen Temperaturwert des Bodenteils 4 dar, den das Bodenteil 4 zur Zeit der Messung aufweist. In der Figur 1 ist nur ein solcher Temperaturmesser 12 dargestellt, es ist aber auch möglich, mehrere Temperaturmesser an verschiedenen Stellen des Bodenteils 4 anzubringen, um so einen gemittelten Temperatur-Istwert des Bodenteils 4 über einen größeren Bereich des Bodenteils 4 zu erhalten. Ist eine Messung direkt an der Form nicht möglich, kann auch die Vor- oder, und Rücklauftemperatur des Mediums in den Leitungen nahe der Form gemessen werden.

Der Temperatur-Istwert des Bodenteils 4 wird an die Vorrichtung 3 zum Steuern des Temperiergeräts 2 übermittelt. Die Übermittlung kann zu vorgegebenen Zeiten oder in bestimmten Abständen oder periodisch erfolgen. Auch kann vorgesehen sein, dass der Temperatur-Istwert des Bodenteils von der Vorrichtung 3 zum Steuern zu vorgegebenen Zeiten oder in bestimmten Abständen oder periodisch abgefragt wird.

Mittels eines Durchflussmessers 13 kann der Durchfluss des Temperiermediums nach Durchfließen des Bodenteils 4 gemessen werden. Der gemessene Durchflusswert kann herangezogen werden, um die Pumpenleistung zu regeln. Die Regelung des Volumenstroms ist insbesondere bei Medien mit sich stark verändernder Viskosität bei zunehmender Temperatur von Vorteil, da bei zunehmender Temperatur bei konstantem Volumenstrom die Pumpenleistung gedrosselt werden kann. Der Durchflusswert wird an die Vorrichtung 3 zum Steuern des Temperiergeräts 2 übermittelt. Die Übermittlung kann zu vorgegebenen Zeiten oder in bestimmten Abständen oder periodisch erfolgen. Auch kann vorgesehen sein, dass der Durchflusswert von der Vorrichtung 3 zu vorgegebenen Zeiten oder in bestimmten Abständen oder periodisch abgefragt wird.

In die Vorrichtung 3 zum Steuern wird eine Solltemperatur für das Bodenteil 4 eingegeben. Diese Solltemperatur soll mittels des Temperiermediums erreicht und gehalten werden. Zudem hat die Vorrichtung 3 Zugriff auf Betriebsparameter der Blasformmaschine, so dass sich ein Stellwert für das Temperiergerät 2 als eine Funktion f(Solltemperatur, Prozessdaten) ergibt. Dieser Stellwert wird von der Vorrichtung 3 an das Temperiergerät 2 übermittelt. Der Stellwert enthält Informationen, wie die Heizstrecke 9, das Rückschlagventil 7, die Pumpe 10 und das Regelventil 8 betrieben werden sollen.

Übersteigt beispielsweise der Temperatur-Istwert eines Blasformteils den Temperatur-Sollwert für eine vorgegebene Zeitdauer, z.B. 2, 3 oder 4 Minuten oder länger oder kürzer, um einen vorgegebenen Wert, z.B. 5°C, 10°C, 15°C oder mehr oder weniger, so schaltet das Temperiergerät 2 von einem Heizmodus in einen Kühlmodus um. Hierbei wird die Heizstrecke 9 nicht mehr angesteuert, sondern es öffnet sich das Regelventil 8, welches im Anschluss des Temperiermediumrücklaufs des Temperiergeräts 2 angeordnet ist. So kann heißes Temperiermedium entweichen und über das Rückschlagventil 7 Temperiermedium mit der ersten Temperatur, d.h. vergleichbar kaltes Temperiermedium, nachströmen. Erreicht die Vorlauftemperatur einen bestimmten Wert, z.B. 5°C, 10°C, 15°C unterhalb des zuvor gemessenen Temperatur-Istwerts, so schließt das Regelventil 8 wieder. Der Temperatur-Istwert des Blasformteils ist durch diesen Prozess um ein paar Grad Celsius abgesunken und liegt wieder in Bereich des Temperatur-Sollwerts.

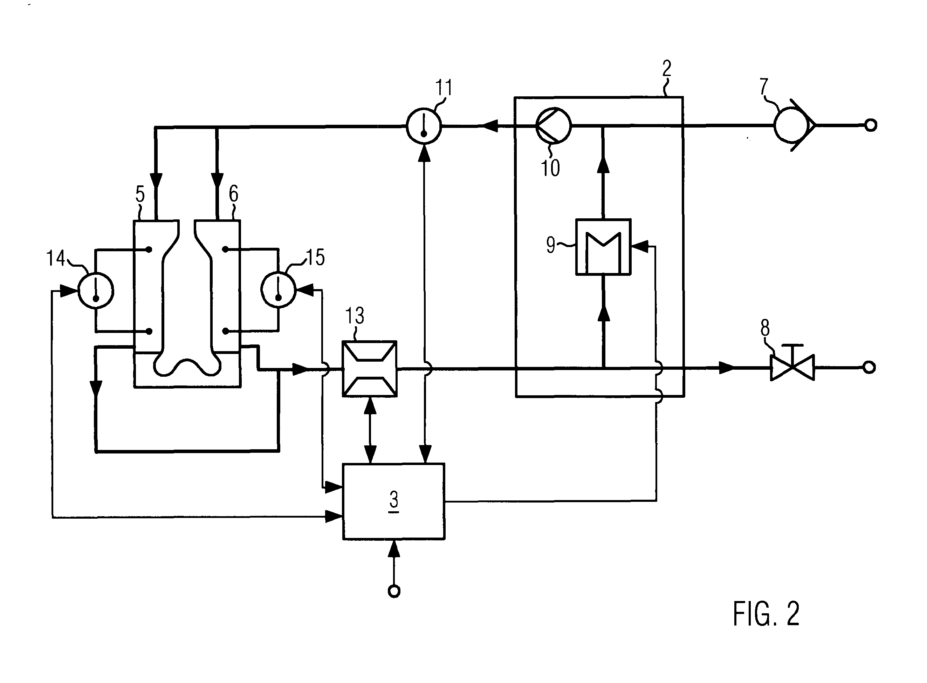

Figur 2 zeigt eine beispielhafte Anordnung einer Blasform 1 und eines Temperiergeräts 2, in der eine erfindungsgemäße Vorrichtung 3 zum Steuern eines Temperiergeräts 2 einer Blasformmaschine zum Temperieren der beiden Seitenteile 5, 6 einer Blasform 1 auf eine Solltemperatur vorgesehen ist. Im Wesentlichen sind die Elemente in Figur 2 gleich zu denen in Figur 1. Lediglich durchfließt in Figur 2 das Temperiermedium Kanäle in den beiden Seitenteilen 5, 6 oder der Blasformteil-Aufnahme der Blasform 1 und durchfließt nicht das Bodenteil 4 der Blasform 1. Das Temperiermedium wird durch Kanäle durch die Seitenteile 5, 6 der Blasform 1 geleitet, so dass es durch einen Wärmeübergang zwischen dem Temperiermedium und den Seitenteilen 5, 6 zu einer Erwärmung der Seitenteile 5, 6 kommt, wenn die Temperatur des Temperiermediums höher als die Temperatur der Seitenteile 5, 6 ist bzw. zu einer Abkühlung der Seitenteile 5, 6 kommt, wenn die Temperatur des Temperiermediums kleiner als die Temperatur der Seitenteile 5, 6 ist.

Der Temperatur-Istwert der beiden Seitenteile 5, 6 wird wie dargestellt durch jeweils einen Temperaturmesser 14, 15 in einem Seitenteil 5, 6 gemessen. In der Figur 2 ist nur ein solcher Temperaturmesser 14, 15 pro Seitenteil 5, 6 dargestellt, es ist aber auch möglich, mehrere Temperaturmesser an verschiedenen Stellen jedes der beiden Seitenteile 5, 6 anzubringen, um so einen gemittelten Ist-Temperaturwert der Seitenteile 5, 6 über einen größeren Bereich der Seitenteile 5, 6 zu erhalten. Ist eine Messung direkt an der Form nicht möglich, kann auch die Vor- oder, und Rücklauftemperatur des Mediums in den Leitungen nahe der Form gemessen werden.

Die Temperatur-Istwerte der Seitenteile 5, 6 werden an die Vorrichtung 3 zum Steuern des Temperiergeräts 2 übermittelt. Die Übermittlung kann zu vorgegebenen Zeiten oder in bestimmten Abständen oder periodisch erfolgen. Auch kann vorgesehen sein, dass die Temperatur-Istwerte der Seitenteile 5, 6 von der Vorrichtung 3 zu vorgegebenen Zeiten oder in bestimmten Abständen oder periodisch abgefragt wird.

Mittels eines Durchflussmessers 13 kann der Durchfluss des Temperiermediums nach Durchfließen der Seitenteile 5, 6 gemessen werden. Der gemessene Durchflusswert kann herangezogen werden, um die Pumpenleistung zu regeln. Die Regelung des Volumenstroms ist insbesondere bei Medien mit sich stark verändernder Viskosität bei zunehmender Temperatur von Vorteil, da bei zunehmender Temperatur bei konstantem Volumenstrom die Pumpenleistung gedrosselt werden kann. Der Durchflusswert wird an die Vorrichtung 3 zum Steuern des Temperiergeräts 2 übermittelt. Die Übermittlung kann zu vorgegebenen Zeiten oder in bestimmten Abständen oder periodisch erfolgen. Auch kann vorgesehen sein, dass der Durchflusswert von der Vorrichtung 3 zum Steuern zu vorgegebenen Zeiten oder in bestimmten Abständen oder periodisch abgefragt wird.

In die Vorrichtung 3 zum Steuern wird ein Wert für die Solltemperatur der Seitenteile 5, 6 eingegeben. Diese Solltemperatur soll mittels des Temperiermediums, das die Seitenteile 5, 6 durchfließt, erreicht und gehalten werden. Zudem hat die Vorrichtung 3 auf Betriebsparameter der Blasformmaschine, so dass sich ein Stellwert für das Temperiergerät 2 als eine Funktion f(Solltemperatur, Prozessdaten) ergibt. Dieser Stellwert wird von der Vorrichtung 3 an das Temperiergerät 2 übermittelt. Der Stellwert enthält Informationen, wie die Heizstrecke 9, das Rückschlagventil 7, die Pumpe 10 und das Regelventil 8 betrieben werden sollen.

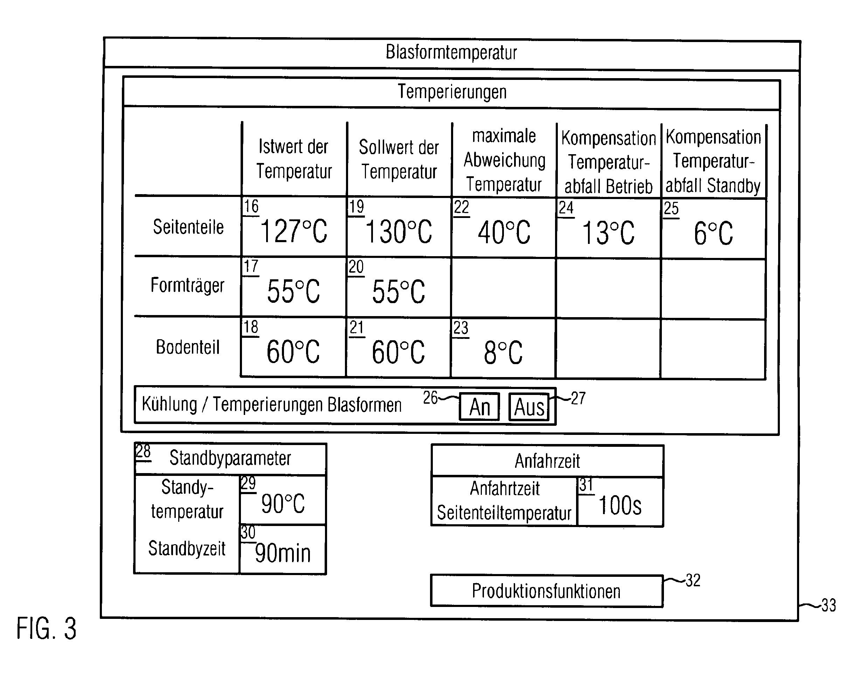

Figur 3 zeigt eine Anzeige 33 der Anzeigevorrichtung der Vorrichtung 3 zum Steuern des Temperiergeräts 2 betreffend die Blasformtemperatur. In einer tabellarischen Übersicht sind hierbei für die Seitenteile 5, 6, den Formträger und das Bodenteil 4 Istwerte 16, 17, 18 der Temperatur und Sollwerte 19, 20, 21 der Temperatur angegeben. Die Istwerte 16, 17, 18 entsprechen den Temperaturwerten, die mittels der Temperaturmesser 12, 14, 15 in den Seitenteilen 5, 6, dem Formträger bzw. in dem Bodenteil 4 gemessen werden. Die Sollwerte 19, 20, 21 der Temperatur entsprechen den Temperaturwerten, welche die jeweiligen Teile der Blasform 1 aufweisen sollen; diese Werte sind vorgegeben. Für die Seitenwände 5, 6 und das Bodenteil 4 sind zudem tolerierbare maximale Abweichungen 22, 23 von der Solltemperatur 19, 21 angegeben, die auftreten dürfen bevor die Produktion automatisch unterbrochen wird. Für die Formwand sind zudem Werte für die Kompensation 24 des Temperaturabfalls während des Betriebes bzw. für die Kompensation 25 des Temperaturabfalls bei Standby angegeben. Diese Kompensationen sind u.a. aufgrund der hohen Solltemperatur 19 der Seitenteile 5, 6 bzw. verschiedener anderer Prozessparameter, wie z.B. der Formträgermasse, der Ausstoßleistung der Maschine oder der Preformtemperatur, erforderlich.

Mittels zweier Schaltflächen kann gewählt werden, ob die Kühlung/Temperierung der Blasformen 1 angestellt 26 oder ausgestellt 27 werden soll.

Als Standbyparameter 28 der Seitenteile 5, 6 können die Standbytemperatur 29 - hier 90°C - und die Standbyzeit 30 - hier 90 Minuten - gewählt werden, um einen zu hohen Energieverlust zu vermeiden.

Die Anfahrzeit 31 für die Temperatur der Seitenteile 5, 6 nach einem Standby kann auch gewählt werden; im dargestellten Fall sind für die Anfahrzeit 31 100 Sekunden gewählt worden.

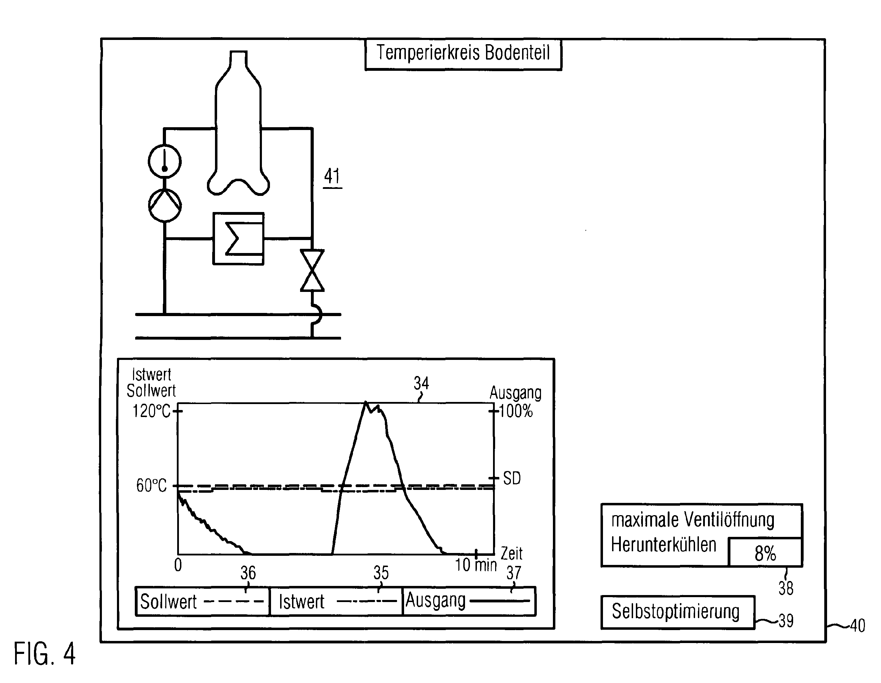

Figur 4 zeigt eine Anzeige 40 der Anzeigevorrichtung der Vorrichtung 3 zum Steuern des Temperiergeräts 2 betreffend den Temperierkreislauf des Bodenteils 4. In einem Diagramm 34 ist der Verlauf des Istwerts 35 (strichpunktierte Linie) der Temperatur in °C, der Verlauf des Sollwerts 36 (gestrichelte Linie) der Temperatur in °C und der Verlauf des Ausgangs 37 in % (durchgezogene Linie), d.h. die Heizleistung der Heizstrecke, in Abhängigkeit von der Zeit in Minuten dargestellt. Der Sollwert 36 des Bodenteils 4 beträgt 60°C. Wenn der Istwert 35 unter den Sollwert 36 abfällt, findet eine Regelung der Heizleistung der Heizstrecke 9 des Temperiergeräts 2 statt, wozu entsprechend der Ausgang 37 gesteuert wird.

Die Anzeige 40 der Anzeigenvorrichtung zeigt zudem eine schematische Ansicht 41 des Temperierkreises des Bodenteils 4.

Zudem kann der Wert der maximalen Ventilöffnung 38 zum Herunterkühlen ausgewählt werden; im dargestellten Fall wurde er auf 8% gewählt.

Weiterhin kann eine Selbstoptimierung 39 der Parameter ausgewählt werden.

Eine Anzeige wie sie in Figur 4 dargestellt ist, kann analog für einen Temperierkreis der Seitenteile 5, 6 und/oder einen Temperierkreis des Formträgers zur Verfügung gestellt werden.

## Patentansprüche

1. Vorrichtung (3) zum Steuern eines Temperiergeräts (2) einer Blasformmaschine zum Temperieren mindestens eines Blasformteils (4, 5, 6) einer Blasform (1), die aus mindestens zwei Blasformteilen besteht, oder einer Blasform-Aufnahme, auf eine Solltemperatur, wobei die Vorrichtung (3) umfasst:
- Mittel zum Empfangen eines Temperatur-Istwerts des Blasformteils (4, 5, 6) oder der Blasform-Aufnahme, wobei der Temperatur-Istwert mittels eines Temperaturmessers (12, 14, 15) in dem Blasformteil (4, 5, 6) oder eine Blasformteil-Aufnahme oder in Zuleitungen für Temperiermedium zu bzw. Ableitungen für das Temperiermedium von dem Blasformteil oder der Blasformteil-Aufnahme gemessen wird,
- Mittel zum Empfangen eines Temperatur-Sollwerts des Blasformteils (4, 5, 6) oder der Blasformteil-Aufnahme, wobei das Blasformteil (4, 5, 6) oder die Blasformteil-Aufnahme von dem Temperiermedium eines Temperierkreislaufs durchflossen wird,
- Mittel zum Analysieren des empfangenen Temperatur-Istwerts und des empfangenen Temperatur-Sollwerts,
- Mittel zum Berechnen eines Stellwerts für das Temperiergerät (2) aus dem empfangenen Temperatur-Istwert und dem empfangenen Temperatur-Sollwert und
- Mittel zum Weiterleiten des Stellwerts an das Temperiergerät (2).

2. Die Vorrichtung nach Anspruch 1, weiter umfassend Mittel zum Empfangen von Betriebsparametern der Blasformmaschine.

3. Die Vorrichtung nach Anspruch 2, wobei die Mittel zum Analysieren zudem die empfangenen Betriebsparameter analysieren, wobei die Mittel zum Berechnen des Stellwerts für das Temperiergerät (2) zudem die empfangenen Betriebsparameter für das Berechnen des Stellwerts verwenden und wobei die Mittel zum Weiterleiten diesen Stellwert an das Temperiergerät (2) weiterleiten.

4. Die Vorrichtung nach einem der Ansprüche 1 bis 3, weiter umfassend Mittel zum Empfangen eines Vorlauftemperaturwerts des Temperiermediums bevor es durch das Blasformteil (4, 5, 6) oder durch die Blasformteil-Aufnahme fließt, wobei der Vorlauftemperaturwert mittels eines Vorlauf-Temperaturmessers (11) in dem Temperiermedium gemessen wird.

5. Die Vorrichtung nach einem der Ansprüche 1 bis 4, weiter umfassend Mittel zum Empfangen eines Durchflusswerts des Temperiermediums, nachdem es durch das Blasformteil (4, 5, 6) oder durch die Blasformteil-Aufnahme geflossen ist, wobei der Durchflusswert mittels eines Durchflussmessers (13) in dem Temperiermedium gemessen wird.

6. Die Vorrichtung nach einem der Ansprüche 1 bis 5, wobei die Mittel zum Empfangen des Temperatur-Istwerts zu vorgegebenen Zeiten oder in bestimmten Abständen oder periodisch eine Anfrage an den Temperaturmesser (12, 14, 15) in dem Blasformteil (4, 5, 6) oder in der Blasformteil-Aufnahme übermitteln und in Antwort auf die Anfrage den Temperatur-Istwert übermittelt bekommen und dann empfangen.

7. Die Vorrichtung nach einem der Ansprüche 4 bis 6, wobei die Mittel zum Empfangen des Vorlauftemperaturwerts zu vorgegebenen Zeiten oder in bestimmten Abständen oder periodisch eine Anfrage an den Vorlauf-Temperaturmesser (11) in dem Temperiermedium übermitteln und in Antwort auf die Anfrage den Vorlauftemperaturwert übermittelt bekommen und dann empfangen.

8. Die Vorrichtung nach einem der Ansprüche 5 bis 7, wobei die Mittel zum Empfangen des Durchflusswerts zu vorgegebenen Zeiten oder in bestimmten Abständen oder periodisch eine Anfrage an den Durchflussmesser (13) in dem Temperiermedium übermitteln und in Antwort auf die Anfrage den Durchflusswert übermittelt bekommen und dann empfangen.

9. Die Vorrichtung nach einem der Ansprüche 1 bis 8 weiter umfassend eine Anzeigevorrichtung, wie vorzugsweise einen Berührungsbildschirm.

10. Verfahren zum Steuern eines Temperiergeräts (2) einer Blasformmaschine zum Temperieren mindestens eines Blasformteils (4, 5, 6) einer Blasform (1) oder einer Blasformteil-Aufnahme auf eine Solltemperatur, wobei das Verfahren die folgenden Schritte umfasst:
- Empfangen eines Temperatur-Istwerts des Blasformteils (4, 5, 6) oder der Blasformteil-Aufnahme durch eine Vorrichtung (3) zum Steuern des Temperiergeräts (1) nach einem der Ansprüche 1 bis 7, wobei der Temperatur-Istwert mittels eines Temperaturmessers (12, 14, 15) in dem Blasformteil (4, 5, 6) oder der Blasformteil-Aufnahme gemessen wird,
- Empfangen eines Temperatur-Sollwerts des Blasformteils (4, 5, 6) oder der Blasformteil-Aufnahme durch die Vorrichtung (3), wobei das Blasformteil (4, 5, 6) oder die Blasformteil-Aufnahme von Temperiermedium eines Temperierkreislaufs durchflossen wird,
- Analysieren des empfangenen Temperatur-Istwerts und des empfangenen Temperatur-Sollwerts durch die Vorrichtung (3),
- Berechnen eines Stellwerts für das Temperiergerät (2) aus dem empfangenen Temperatur-Istwert und dem empfangenen Temperatur-Sollwert durch die Vorrichtung (3) und
- Weiterleiten des Stellwerts an das Temperiergerät (2) durch die Vorrichtung (3).

11. Das Verfahren nach Anspruch 10, weiter umfassend den Schritt von Empfangen von Betriebsparametern der Blasformmaschine durch die Vorrichtung (3).

12. Das Verfahren nach Anspruch 11, weiter umfassend die Schritte von Analysieren der empfangenen Betriebsparameter durch die Vorrichtung (3), Berechnen des Stellwerts für das Temperiergerät (2) aus dem empfangenen Temperatur-Istwert, dem empfangenen Temperatur-Sollwert und den empfangenen Betriebsparameter durch die Vorrichtung (3) und Weiterleiten dieses Stellwerts an das Temperiergerät (2) durch die Vorrichtung (3).

13. Das Verfahren nach einem der Ansprüche 10 bis 12, weiter umfassend den Schritt von Empfangen, durch die Vorrichtung (3), eines Vorlauftemperaturwerts des Temperiermediums bevor es durch das Blasformteil (4, 5, 6) oder die Blasformteil-Aufnahme fließt, wobei der Vorlauftemperaturwert mittels eines Vorlauf-Temperaturmessers (11) in dem Temperiermedium gemessen wird.

14. Das Verfahren nach einem der Ansprüche 10 bis 13, weiter umfassend den Schritt von Empfangen, durch die Vorrichtung (3), eines Durchflusswerts des Temperiermediums nachdem es durch das Blasformteil (4, 5, 6) oder die Blasformteil-Aufnahme geflossen ist, wobei der Durchflusswert mittels eines Durchflussmessers (13) in dem Temperiermedium gemessen wird.

15. Das Verfahren nach einem der Ansprüche 10 bis 14, wobei dem Empfangen des Temperatur-Istwerts ein Übermitteln einer Anfrage an den Temperaturmesser (12, 14, 15) in dem Blasformteil (4, 5, 6) oder der Blasformteil-Aufnahme zu vorgegebenen Zeiten oder in bestimmten Abständen oder periodisch durch die Vorrichtung (3) zeitlich vorangeht und in Antwort auf die Anfrage ein Übermitteln des Temperatur-Istwerts erfolgt.

16. Das Verfahren nach einem der Ansprüche 13 bis 15, wobei dem Empfangen des Vorlauftemperaturwerts ein Übermitteln einer Anfrage an den Vorlauf-Temperaturmesser (11) in dem Temperiermedium zu vorgegebenen Zeiten oder in bestimmten Abständen oder periodisch durch die Vorrichtung (3) zeitlich vorangeht und in Antwort auf die Anfrage ein Übermitteln des Vorlauftemperaturwerts erfolgt.

17. Das Verfahren nach einem der Ansprüche 14 bis 16, wobei dem Empfangen des Durchflusswerts ein Übermitteln einer Anfrage an den Durchflussmesser (13) in dem Temperiermedium zu vorgegebenen Zeiten oder in bestimmten Abständen oder periodisch durch die Vorrichtung (3) zeitlich vorangeht und in Antwort auf die Anfrage ein Übermitteln des Durchflusswerts erfolgt.

18. Das Verfahren nach einem der Ansprüche 10 bis 17 weiter umfassend den Schritt eines Anzeigens einer Anzeige auf einer Anzeigevorrichtung, wie vorzugsweise einem Berührungsbildschirm.

## Claims

1. Apparatus (3) for controlling a tempering device (2) of a blow-molding machine for tempering at least one blow mold member (4, 5, 6) of a blow mold (1), comprised by at least two blow mold members, or a blow mold carrier to a target temperature, where the apparatus (3) comprises:
- a device for receiving a temperature actual value of the blow mold member (4, 5, 6) or the blow mold member carrier, where the temperature actual value is measured by a temperature measuring device (12, 14, 15) in the blow mold member (4, 5, 6) or a blow mold carrier or in supply lines for the tempering medium to or discharge lines for the tempering medium from the blow mold member or the carrier, respectively,
- a device for receiving a temperature target value of the blow mold member (4, 5, 6) or the blow mold member carrier, where the tempering medium of a tempering circuit is flowing through the blow mold member (4, 5, 6) or the blow mold member carrier,
- a device for analyzing the received temperature actual value and the received temperature target value,
- a device for calculating a setting value for the tempering device (2) from the received temperature actual value and the received temperature target value, and
- a device for transmitting the setting value to the tempering device (2).

2. Apparatus according to claim 1, further comprising a device for receiving operating parameters of the blow-molding machine.

3. Apparatus according to claim 2, where the device for analyzing also analyzes the received operating parameters, where the device for calculating the setting value for the tempering device (2) also uses the received operating parameters for calculating the setting value, and where the device for transmitting transmits the setting value to the tempering device (2).

4. Apparatus according to one of the claims 1 to 3, further comprising a device for receiving a flow temperature value of the tempering medium before it flows through the blow mold member (4, 5, 6) or the blow mold member carrier, where the flow temperature value is measured by a flow temperature measuring device (11) in the tempering medium.

5. Apparatus according to one of the claims 1 to 4, further comprising a device for receiving a flow rate value of the tempering medium after it flowed through the blow mold member (4, 5, 6) or through the blow mold member carrier, where the flow rate value is measured by a flow meter (13) in the tempering medium.

6. Apparatus according to one of the claims 1 to 5, where the device for receiving the temperature actual value at predetermined times or at specified intervals or periodically transmits a request to the temperature measuring device (12, 14, 15) in the blow mold member (4, 5, 6) or in the blow mold member carrier and in response to the request is transmitted and then receives the temperature actual value.

7. Apparatus according to one of the claims 4 to 6, where the device for receiving the flow temperature value at predetermined times or at specified intervals or periodically transmits a request to the flow temperature measuring device (11) in the tempering medium and in response to the request is transmitted and then receives the flow temperature value.

8. Apparatus according to one of the claims 5 to 7, where the device for receiving the flow rate value at predetermined times or at specified intervals or periodically transmits a request to the flow rate meter (13) in the tempering medium and in response to the request is transmitted and then receives the flow rate value.

9. Apparatus according to one of the claims 1 to 8, further comprising a display device, such as, preferably a touch screen.

10. Method for controlling a tempering device (2) of a blow-molding machine for tempering at least one blow mold member (4, 5, 6) of a blow mold (1) or a blow mold member carrier to a target temperature, the method comprising the following steps:
- reception of a temperature actual value of the blow mold member (4, 5, 6) or the blow mold member carrier by an apparatus (3) for controlling the tempering device (1) according to one of the claims 1 to 7, where the temperature actual value is measured by a temperature measuring device (12, 14, 15) in the blow mold member (4, 5, 6) or the blow mold member carrier,
- reception of a temperature target value of the blow mold member (4, 5, 6) or the blow mold member carrier by the apparatus (3), where the blow mold member (4, 5, 6) or the blow mold member carrier has the tempering medium of a tempering circuit flowing through it,
- analyzation of the received temperature actual value and the received temperature target value by the apparatus (3),
- calculation of a setting value for the tempering device (2) from the received temperature actual value and the received temperature target value by the apparatus (3) and
- transmission of the setting value to the tempering device (2) by the apparatus (3).

11. Method according to claim 10, further comprising the step of reception of operating parameters of the blow-molding machine by the apparatus (3).

12. Method according to claim 11, further comprising the steps of analyzation of the received operating parameters by the apparatus (3), calculation of the setting value for the tempering device (2) from the received temperature actual value, the received temperature target value and the received operating parameters by the apparatus (3) and transmission of the setting value to the tempering device (2) by the apparatus (3).

13. Method according to one of the claims 10 to 12, further comprising the step of reception by the apparatus (3) of a flow temperature value of the tempering medium before it flows through the blow mold member (4, 5, 6) or the blow mold member carrier, where the flow temperature value is measured by a flow temperature measuring device (11) in the tempering medium.

14. Method according to one of the claims 10 to 13, further comprising the steps of reception by the apparatus (3) of a flow rate value of the tempering medium after it has flowed through the blow mold member (4, 5, 6) or the blow mold member carrier, where the flow rate value is measured by a flow meter (13) in the tempering medium.

15. Method according to one of the claims 10 to 14, where reception of the temperature actual value is temporally preceded by a transmission of a request to the temperature measuring device (12, 14, 15) in the blow mold member (4, 5, 6) or the blow mold member carrier at predetermined times or at specified intervals or periodically by the apparatus (3) and transmission of the temperature actual value occurs in response to the request.

16. Method according to one of the claims 13 to 15, where reception of the flow temperature value is temporally preceded by a transmission of a request to the flow temperature measuring device (11) in the tempering medium at predetermined times or at specified intervals or periodically by the apparatus (3) and transmission of the flow temperature value occurs in response to the request.

17. Method according to one of the claims 14 to 16, where reception of the flow rate value is temporally preceded by a transmission of a request to the flow rate meter (13) in the tempering medium at predetermined times or at specified intervals or periodically by the apparatus (3) and transmission of the flow rate value occurs in response to the request.

18. Method according to one of the claims 10 to 17, further comprising the step of displaying a display on a display device, preferably like a touch screen.

## Revendications

1. Dispositif (3) pour commander un appareillage de thermorégulation (2) d'une machine de moulage ou de formage par soufflage pour tempérer ou mettre à température au moins une partie de moule de soufflage (4, 5, 6) d'un moule de soufflage (1), qui est constitué d'au moins deux parties de moule de soufflage, ou un logement d'accueil de moule de soufflage, pour l'amener à une température de consigne, le dispositif (3) comprenant :
- des moyens de réception d'une valeur instantanée réelle de température de la partie de moule de soufflage (4, 5, 6) ou du logement d'accueil de moule de soufflage, la valeur instantanée réelle de température étant mesurée à l'aide d'un appareil de mesure de température (12, 14, 15) dans la partie de moule de soufflage (4, 5, 6) ou un logement d'accueil de moule de soufflage, ou dans des conduites d'alimentation pour du fluide de thermorégulation ou respectivement des conduites d'évacuation pour le fluide de thermorégulation de la partie de moule de soufflage ou du logement d'accueil de moule de soufflage,
- des moyens de réception d'une valeur de consigne de température de la partie de moule de soufflage (4, 5, 6) ou du logement d'accueil de moule de soufflage, la partie de moule de soufflage (4, 5, 6) ou le logement d'accueil de moule de soufflage étant traversé par l'écoulement du fluide de thermorégulation du circuit de thermorégulation,
- des moyens d'analyse pour analyser la valeur instantanée réelle de température reçue et la valeur de consigne de température reçue,
- des moyens de calcul pour calculer une valeur de réglage pour l'appareillage de thermorégulation (2) à partir de la valeur instantanée réelle de température reçue et de la valeur de consigne de température reçue,
et
- des moyens de transmission pour transmettre la valeur de réglage à l'appareillage de thermorégulation (2).

2. Le dispositif selon la revendication 1, comprenant, en outre, des moyens de réception de paramètres de fonctionnement de la machine de moulage ou de formage par soufflage.

3. Le dispositif selon la revendication 2, dans lequel les moyens d'analyse analysent, en outre, les paramètres de fonctionnement reçus, les moyens de calcul de la valeur de réglage pour l'appareillage de thermorégulation (2) utilisent, en outre, les paramètres de fonctionnement reçus, pour le calcul de la valeur de réglage, et dans lequel les moyens de transmission transmettent cette valeur de réglage à l'appareillage de thermorégulation (2).

4. Le dispositif selon l'une des revendications 1 à 3, comprenant, en outre, des moyens de réception d'une valeur de température d'aller du fluide de thermorégulation avant qu'il s'écoule à travers la partie de moule de soufflage (4, 5, 6) ou le logement d'accueil de moule de soufflage, la valeur de température d'aller étant mesurée à l'aide d'un appareil de mesure de température d'aller (11) dans le fluide de thermorégulation.

5. Le dispositif selon l'une des revendications 1 à 4, comprenant, en outre, des moyens de réception d'une valeur de débit du fluide de thermorégulation, après qu'il se soit écoulé à travers la partie de moule de soufflage (4, 5, 6) ou le logement d'accueil de moule de soufflage, la valeur de débit étant mesurée à l'aide d'un appareil de mesure de débit (13) dans le fluide de thermorégulation.

6. Le dispositif selon l'une des revendications 1 à 5, dans lequel les moyens de réception de la valeur instantanée réelle de température transmettent à des instants donnés ou à des intervalles déterminés ou périodiquement, une demande à l'appareil de mesure de température (12, 14, 15) dans la partie de moule de soufflage (4, 5, 6) ou dans le logement d'accueil de moule de soufflage, et réceptionnent ensuite la valeur instantanée réelle de température, qui leur est transmise en réponse à la demande.

7. Le dispositif selon l'une des revendications 4 à 6, dans lequel les moyens de réception de la valeur de température d'aller transmettent à des instants donnés ou à des intervalles déterminés ou périodiquement, une demande à l'appareil de mesure de température d'aller (11) dans le fluide de thermorégulation, et réceptionnent ensuite la valeur de température d'aller, qui leur est transmise en réponse à la demande.

8. Le dispositif selon l'une des revendications 5 à 7, dans lequel les moyens de réception de la valeur de débit transmettent à des instants donnés ou à des intervalles déterminés ou périodiquement, une demande à l'appareil de mesure débit (13) dans le fluide de thermorégulation, et réceptionnent ensuite la valeur de débit, qui leur est transmise en réponse à la demande.

9. Le dispositif selon l'une des revendications 1 à 8, comprenant, en outre, un dispositif de visualisation, comme de préférence un écran tactile.

10. Procédé pour commander un appareillage de thermorégulation (2) d'une machine de moulage ou de formage par soufflage pour tempérer ou mettre à température au moins une partie de moule de soufflage (4, 5, 6) d'un moule de soufflage (1) ou un logement d'accueil de moule de soufflage, pour l'amener à une température de consigne, le procédé comprenant les étapes suivantes :
- la réception d'une valeur instantanée réelle de température de la partie de moule de soufflage (4, 5, 6) ou du logement d'accueil de moule de soufflage par un dispositif (3) pour commander l'appareillage de thermorégulation (2) selon l'une des revendications 1 à 7, la valeur instantanée réelle de température étant mesurée à l'aide d'un appareil de mesure de température (12, 14, 15) dans la partie de moule de soufflage (4, 5, 6) ou le logement d'accueil de moule de soufflage,
- la réception d'une valeur de consigne de température de la partie de moule de soufflage (4, 5, 6) ou du logement d'accueil de moule de soufflage par le dispositif (3), la partie de moule de soufflage (4, 5, 6) ou le logement d'accueil de moule de soufflage étant traversé par l'écoulement de fluide de thermorégulation d'un circuit de thermorégulation,
- l'analyse par le dispositif (3), de la valeur instantanée réelle de température reçue et de la valeur de consigne de température reçue,
- le calcul par le dispositif (3), d'une valeur de réglage pour l'appareillage de thermorégulation (2) à partir de la valeur instantanée réelle de température reçue et de la valeur de consigne de température reçue, et
- la transmission par le dispositif (3), de la valeur de réglage à l'appareillage de thermorégulation (2).

11. Le procédé selon la revendication 10, comprenant, en outre, l'étape de réception par le dispositif (3), de paramètres de fonctionnement de la machine de moulage ou de formage par soufflage.

12. Le procédé selon la revendication 11, comprenant, en outre, les étapes d'analyse par le dispositif (3), des paramètres de fonctionnement reçus, de calcul par le dispositif (3), de la valeur de réglage pour l'appareillage de thermorégulation (2) à partir de la valeur instantanée réelle de température reçue, de la valeur de consigne de température reçue et des paramètres de fonctionnement reçus, et de transmission par le dispositif (3), de cette valeur de réglage à l'appareillage de thermorégulation (2).

13. Le procédé selon l'une des revendications 10 à 12, comprenant, en outre, l'étape de réception par le dispositif (3), d'une valeur de température d'aller du fluide de thermorégulation avant qu'il s'écoule à travers la partie de moule de soufflage (4, 5, 6) ou le logement d'accueil de moule de soufflage, la valeur de température d'aller étant mesurée à l'aide d'un appareil de mesure de température d'aller (11) dans le fluide de thermorégulation.

14. Le procédé selon l'une des revendications 10 à 13, comprenant, en outre, l'étape de réception par le dispositif (3), d'une valeur de débit du fluide de thermorégulation, après qu'il se soit écoulé à travers la partie de moule de soufflage (4, 5, 6) ou le logement d'accueil de moule de soufflage, la valeur de débit étant mesurée à l'aide d'un appareil de mesure de débit (13) dans le fluide de thermorégulation.

15. Le procédé selon l'une des revendications 10 à 14, d'après lequel la réception de la valeur instantanée réelle de température est précédée dans le temps par la transmission, par le dispositif (3), d'une demande, à des instants donnés ou à des intervalles déterminés ou périodiquement, à l'appareil de mesure de température (12, 14, 15) dans la partie de moule de soufflage (4, 5, 6) ou dans le logement d'accueil de moule de soufflage, et en réponse à la demande est effectuée une transmission de la valeur instantanée réelle de température.

16. Le procédé selon l'une des revendications 13 à 15, d'après lequel la réception de la valeur de température d'aller est précédée dans le temps par la transmission, par le dispositif (3), d'une demande, à des instants donnés ou à des intervalles déterminés ou périodiquement, à l'appareil de mesure de température d'aller (11) dans le fluide de thermorégulation, et en réponse à la demande est effectuée une transmission de la valeur de température d'aller.

17. Le procédé selon l'une des revendications 14 à 16, d'après lequel la réception de la valeur de débit est précédée dans le temps par la transmission, par le dispositif (3), d'une demande, à des instants donnés ou à des intervalles déterminés ou périodiquement, à l'appareil de mesure de débit (13) dans le fluide de thermorégulation, et en réponse à la demande est effectuée une transmission de la valeur de débit.

18. Le procédé selon l'une des revendications 10 à 17, comprenant, en outre, l'étape de visualisation d'une indication sur un dispositif de visualisation, comme de préférence un écran tactile.
